# EUROPEAN PATENT APPLICATION

(11) **EP 3 876 222 A1**
(43) Date of publication of application: **08.09.2021**
(21) Application number: 21159416.3
(22) Date of filing: 25.02.2021
(51) Int. Cl.: G09G 3/20, G09G 5/00, G09G 5/12

(54) **DYNAMIC FRAME RATE MECHANISM FOR DISPLAY DEVICE**

(30) Priority: 03.03.2020 US 202062984348 P; 03.03.2020 US 202062984353 P; 24.02.2021 US 202117183380
(71) Applicant: MEDIATEK INC., Hsin-Chu 300 (TW)
(72) Inventor: LIU, Chang-Chu, 30078 Hsinchu City (TW); CHANG, Sheng-Hsiang, 30078 Hsinchu City (TW); FAN, Kang-Yi, 30078 Hsinchu City (TW); YEH, You-Min, 30078 Hsinchu City (TW)
(74) Representative: Haseltine Lake Kempner LLP

(57) **Abstract**

The present invention provides a processor including a source generator, a request synchronization signal generator and an output circuit. The source generator is configured to generate image data of a frame. The request synchronization signal generator is configured to generate a request synchronization signal to an integrated circuit only after the source generator generates the image data of the frame completely, wherein the request synchronization signal is used to trigger the integrated circuit to send a synchronization signal to the processor. The output circuit is configured to send the image data of the frame to the integrated circuit only after receiving the synchronization signal generated from the integrated circuit in response to the request synchronization signal.

## Description

This application claims the priority of US Provisional Application No. 62/984,353 (filed on March 3th, 2020) and US Provisional Application No. 62/984,348 (filed on March 3th, 2020), which is included herein by reference in its entirety.

### Background

In a command mode of Mobile Industry Processor Interface (MIPI) specification, a display driver integrated circuit (DDIC) periodically generates a synchronization signal (e.g., TE signal defined in MIPI specification) to an Application Processor (AP), and the AP writes image data of a frame into a buffer within the DDIC after receiving the synchronization signal, then the DDIC reads the image data from the buffer to generate corresponding driving signals to a display panel, for the display panel to display contents of the frame. However, because a generation speed of the image data depends on loading of the source generator (e.g. Graphics Processing Unit (GPU)) of the AP, and the GPU may use more than one cycle of the synchronization signal to output a complete frame, the DDIC may not receive the image data from the GPU after sending the synchronization signal. If the DDIC does not receive the image data from the AP after sending the synchronization signal, the DDIC needs to send the same driving signals to the display panel so that the display panel shows a repeated frame. Displaying the repeated frame may affect smoothness of video and lower user satisfaction.

### Summary

It is therefore an objective of the present invention to provide control method of a DDIC and a source generator (e.g., GPU), which can adjust a timing of the synchronization signal to minimize the occurrence of repeated frames, to solve the above-mentioned problems.

According to one embodiment of the present invention, a processor comprising a source generator, a request synchronization signal generator and an output circuit is disclosed. The source generator is configured to generate image data of a frame. The request synchronization signal generator is configured to generate a request synchronization signal to an integrated circuit only after the source generator generates the image data of the frame completely, wherein the request synchronization signal is used to trigger the integrated circuit to send a synchronization signal to the processor. The output circuit is configured to send the image data of the frame to the integrated circuit only after receiving the synchronization signal generated from the integrated circuit in response to the request synchronization signal.

According to another embodiment of the present invention, a control method of a display driver integrated circuit comprises the steps of: receiving a first request synchronization signal from a processor; sending a first synchronization signal, in response to the first request synchronization signal, to the processor; receiving image data of a first frame from the processor, wherein a transmission the image data is triggered based on the first synchronization signal; and generating first driving signals to drive a panel according to the received image data of the first frame.

According to another embodiment of the present invention, a display driver integrated circuit is configured to perform the steps of: receiving a first request synchronization signal from a processor; sending a first synchronization signal, in response to the first request synchronization signal, to the processor; receiving image data of a first frame from the processor, wherein a transmission the image data is triggered based on the first synchronization signal; and generating first driving signals to drive a panel according to the received image data of the first frame.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an electronic device according to one embodiment of the present invention.
FIG. 2 is a timing diagram of signals of the AP and the DDIC according to one embodiment of the present invention.
FIG. 3 is a timing diagram of signals of the AP and the DDIC according to another embodiment of the present invention.
FIG. 4 is a timing diagram of signals of the AP and the DDIC according to another embodiment of the present invention.
FIG. 5 is a timing diagram of signals of the AP and the DDIC according to another embodiment of the present invention.
FIG. 6 is a timing diagram of signals of the AP and the DDIC according to another embodiment of the present invention.
FIG. 7 is a timing diagram of signals of the AP and the DDIC according to another embodiment of the present invention.
FIG. 8 is a timing diagram of signals of the AP and the DDIC according to another embodiment of the present invention.
FIG. 9 is a timing diagram of signals of the AP and the DDIC according to another embodiment of the present invention.
FIG. 10 is a timing diagram of signals of the AP and the DDIC according to another embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

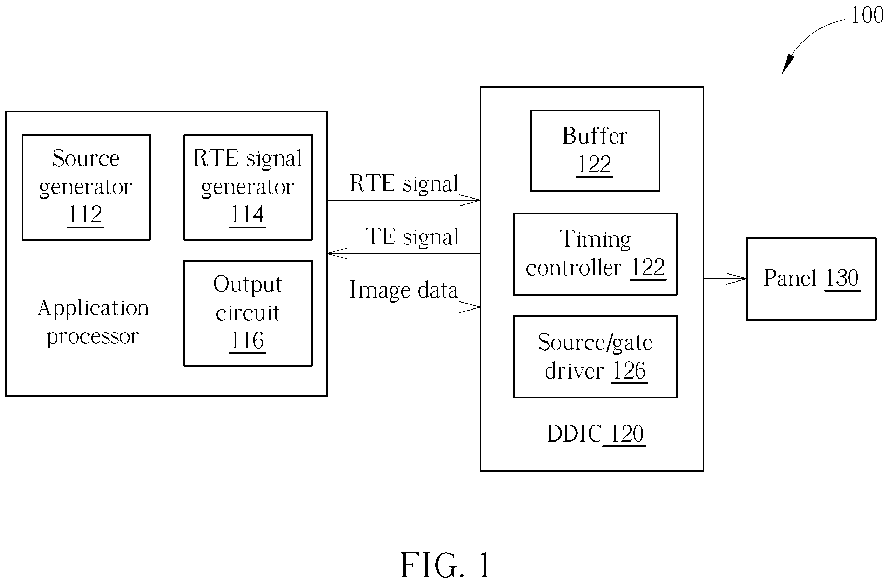

FIG. 1 is a diagram illustrating an electronic device 100 according to one embodiment of the present invention. As shown in FIG. 1, the electronic device 100 comprises an application processor (AP) 110, a display driver integrated circuit (DDIC) 120 and a panel 130. The AP 110 comprises a source generator 112, a request synchronization signal generator (in this embodiment, the request synchronization signal generator is a request TE (RTE) signal generator 114) and an output circuit 116, wherein the source generator 112 may be implemented by one or more hardware or software modules to create image data, the RTE signal generator 114 is configured to send an RTE signal to DDIC 120 after the source generator 112 outputs a complete frame, and the output circuit 118 is configured to output the image data to the DDIC 120 after receiving a TE signal (i.e., a synchronization signal) from the DDIC 120. The DDIC 120 comprises a buffer 122, a timing controller 124 and a source/gate driver 126, wherein the buffer 122 is configured to temporarily store image data from the AP 110, the timing controller 124 receives the image data and control signals from the AP 110 to control the source/gate driver 126 to apply corresponding driving voltages to the panel 130.

The AP 110 and the DDIC 120 operates in a command mode of MIPI specification, that is the AP 110 writes the image data into the buffer 112 of the DDIC 120 only after receiving the TE signal from the DDIC 120, to prevent a tearing effect issue. As mentioned in the background, the conventional DDIC periodically generates the TE signal to the GPU, and the DDIC may not receive the image data after sending the TE signal if the GPU is unable to output a complete frame before receiving the TE signal, causing the panel to display a repeated frame. To solve this problem, the AP 110 is configured to send the RTE signal to the DDIC 120 after the source generator outputs a complete frame, and the DDIC 120 generates the TE signal to the AP 110 after receiving the RTE signal (i.e., the DDIC does not generate the TE signal periodically). Then, after receiving the TE signal from the DDIC 120, the AP 120 writes the image data of a frame into the buffer 122, then the timing controller 124 reads the image data from the buffer 122, for the source/gate driver 126 to generate corresponding driving signals to the panel 130, for the panel 130 to display contents of the frame.

In the embodiment shown in FIG. 1, because the DDIC 120 generates the TE signal after the source generator 112 outputs a complete frame, the DDIC 120 can always receive the image data after sending the TE signal to the AP 110. In another embodiment of the present invention, a timeout mechanism is set in the DDIC 120, that is if the DDIC does not receive the RTE signal after a long time, the DDIC 120 still sends the TE signal to the AP 110, and the DDIC 120 sends the same driving signals to the panel 130 so that the panel 130 shows a repeated frame. In light of above, the DDIC 120 can minimize the occurrence of repeated frames.

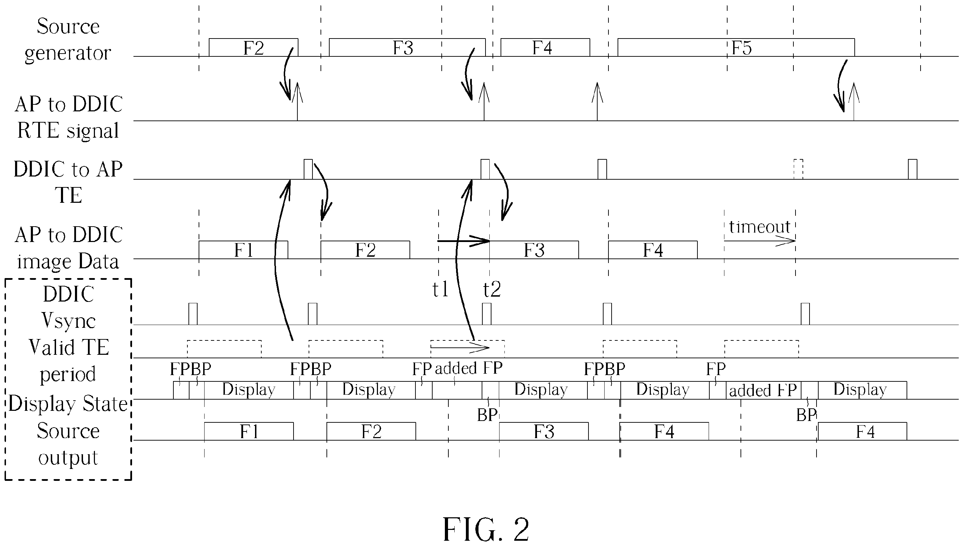

FIG. 2 is a diagram illustrating a timing diagram of signals of the AP 110 and the DDIC 120 according to one embodiment of the present invention. As shown in FIG. 2, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a beginning of a frame (i.e., a beginning of a back porch of the frame) to a specific point of active region (i.e., displayed data) of the frame. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 1 30 to display the contents of the frame F2. In addition, FIG. 2 shows four signals/states of the DDIC 120, wherein "Vsync" is a synchronization signal that indicates a beginning of the frame F2, "valid TE period" is a period that the TE signal is allowed to be sent to the AP 110, "display state" is a transmission of the image data of the frame F2 ("FP" means front porch, and "BP" means back porch), and "source output" is a timing of the driving signals corresponding to the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 1 10 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the DDIC 120 receives the frame F3 late, the timing controller 124 increases a length of the front porch of the frame F2 to delay the displaying time of the next frame F3, wherein the front porch of the frame F2 can be increased by adding invalid data or null data.

In this embodiment, the increased length of the front porch of the frame F2 is equal to a delay time of the frame F3. Specifically, if the DDIC 120 should have started receiving the frame F3 at time t1, but in fact the DDIC 120 start receiving the frame F3 at time t2, the increased length of the front porch of the frame F2 can corresponding to a difference between time t2 and time t1. In addition, because the valid TE period is from the beginning of a frame, the timing controller 124 can easily increase the length of the front porch of the frame F2 until receiving the image data of the frame F3.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 1 10 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late, the timeout mechanism is triggered even if the length of the front porch of the frame F4 is increased. Therefore, the source/gate driver 126 sends the same driving signals to the panel 130 so that the panel 130 shows a repeated frame F4.

It is noted that when the timeout mechanism is triggered, the DDIC 120 may not generate a TE signal to the AP 110, or the DDIC 120 may generate a TE signal to the AP 110 even if no RTE signal is received. At this time, because this TE signal, if any, is not generated in response to the RTE signal, the output circuit 116 does not send the image data of the frame to the DDIC 120. In other words, if the output circuit 116 receives the TE signal, but the source generator 112 does not generate image data of the frame completely, the output circuit 116 can determine that the received TE signal is not generated in response to the RTE signal.

In the embodiment shown in FIG. 2, by designing the RTE signal to control the transmission of the TE signal, it can avoid the need to display the repeated frame F2 due to the late generation of the frame F3 by the source generator 112. Therefore, the images displayed by the panel 130 can be smoother.

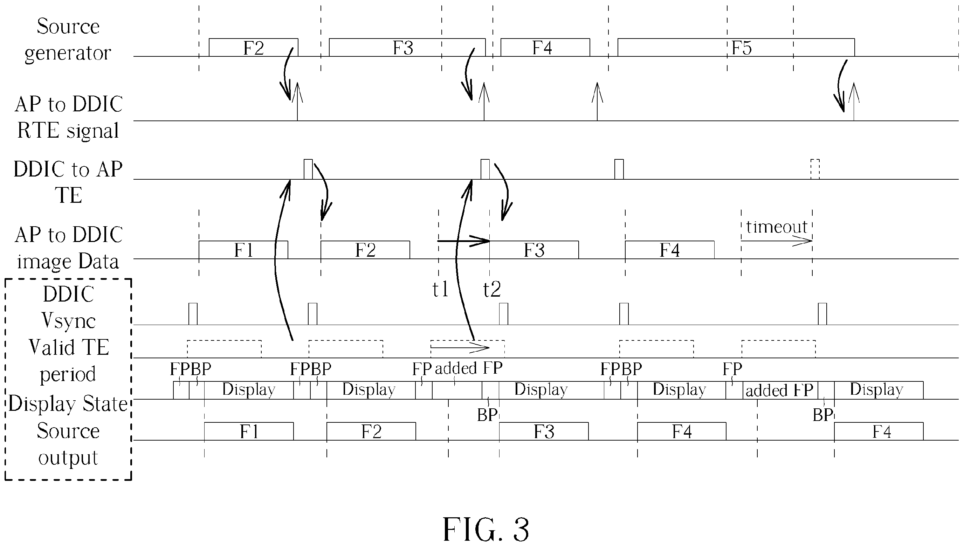

FIG. 3 is a diagram illustrating a timing diagram of signals of the AP 110 and the DDIC 120 according to another embodiment of the present invention. As shown in FIG. 3, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a beginning of a frame (i.e., a beginning of a back porch of the frame) to a specific point of active region (i.e., displayed data) of the frame. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 1 30 to display the contents of the frame F2. In addition, FIG. 3 shows four signals/states of the DDIC 120, wherein "Vsync" is a synchronization signal that indicates a beginning of the frame F2, "valid TE period" is a period that the TE signal is allowed to be sent to the AP 110, "display state" is a transmission of the image data of the frame F2 ("FP" means front porch, and "BP" means back porch), and "source output" is a timing of the driving signals corresponding to the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 1 10 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the DDIC 120 receives the frame F3 late, the timing controller 124 increases a length of the front porch of the frame F2 to delay the displaying time of the next frame F3, wherein the front porch of the frame F2 can be increased by adding invalid data or null data.

In this embodiment, the increased length of the front porch of the frame F2 is constrained based on multiples of delay line unit or specific break points, that is the increased length of the front porch may greater than a delay time of the frame F3. Specifically, if the DDIC 120 should have started receiving the frame F3 at time t1 , but in fact the DDIC 120 start receiving the frame F3 at time t2, the increased length of the front porch of the frame F2 is greater than a difference between time t2 and time t1 .

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 130 to display the contents of the frame F5. In this embodiment, because the DDIC 120 receives the frame F5 too late, the timeout mechanism is triggered even if the length of the front porch of the frame F4 is increased. Therefore, the source/gate driver 126 sends the same driving signals to the panel 130 so that the panel 130 shows a repeated frame F4.

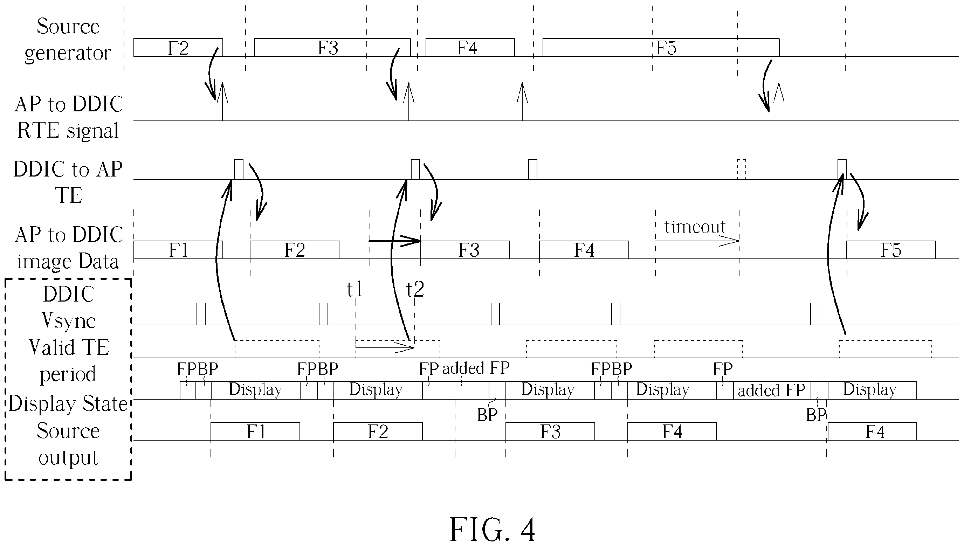

FIG. 4 is a diagram illustrating a timing diagram of signals of the AP 110 and the DDIC 120 according to another embodiment of the present invention. As shown in FIG. 4, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2. In addition, FIG. 4 shows four signals/states of the DDIC 120, wherein "Vsync" is a synchronization signal that indicates a beginning of the frame F2, "valid TE period" is a period that the TE signal is allowed to be sent to the AP 110, "display state" is a transmission of the image data of the frame F2 ("FP" means front porch, and "BP" means back porch), and "source output" is a timing of the driving signals corresponding to the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 1 10 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 130 to display the contents of the frame F3. In this embodiment, because the DDIC 120 receives the frame F3 late, the timing controller 124 increases a length of the front porch of the frame F2 to delay the displaying time of the next frame F3, wherein the front porch of the frame F2 can be increased by adding invalid data or null data.

In this embodiment, the increased length of the front porch of the frame F2 is equal to a delay time of the TE signal. Specifically, if the DDIC 120 should send the TE signal at time t1, but in fact the DDIC 120 sends the TE signal at time t2, the increased length of the front porch of the frame F2 can correspond to a difference between time t2 and time t1.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 1 10 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late, the timeout mechanism is triggered even if the length of the front porch of the frame F4 is increased. Therefore, the source/gate driver 126 sends the same driving signals to the panel 130 so that the panel 130 shows a repeated frame F4.

In the embodiment shown in FIG. 4, by designing the RTE signal to control the transmission of the TE signal, it can avoid the need to display the repeated frame F2 due to the late generation of the frame F3 by the source generator 112.

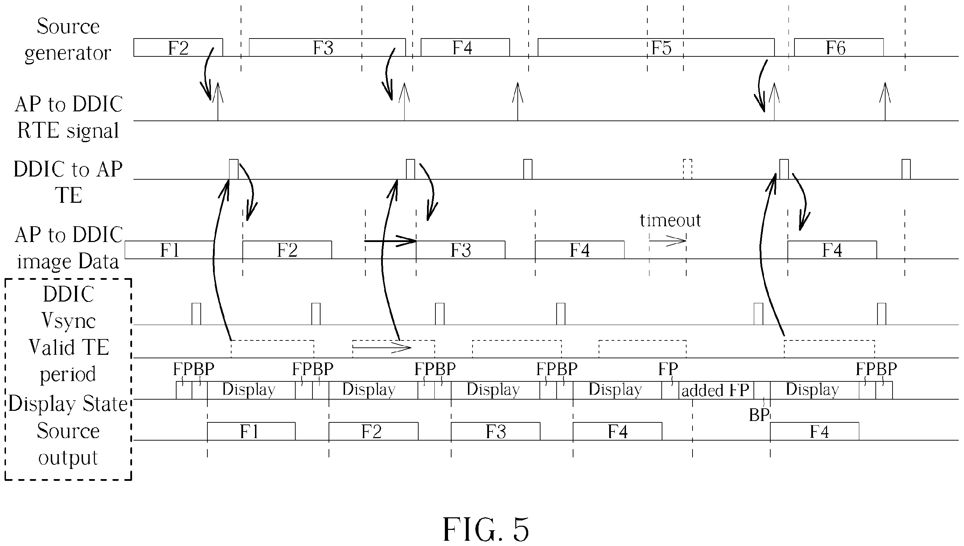

FIG. 5 is a diagram illustrating a timing diagram of signals of the AP 110 and the DDIC 120 according to another embodiment of the present invention. As shown in FIG. 5, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is not too late, and the DDIC 120 has enough margin to prepare for outputting the driving signals to display the image data (i.e., the frame F3 is received before the necessary preparation time of displaying F3), the timing controller 124 does not increase a length of the front porch of the frame F2.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 130 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late and the DDIC 120 does not have enough margin for outputting the image data, the length of the front porch of the frame F4 is increased and the timeout mechanism is triggered. Therefore, the source/gate driver 126 sends the same driving signals to the panel 1 30 so that the panel 1 30 shows a repeated frame F4.

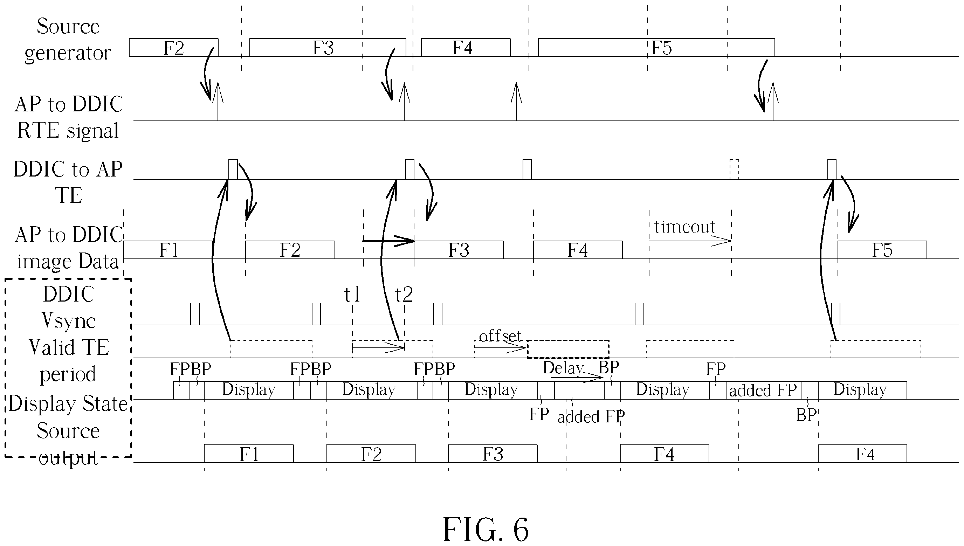

FIG. 6 is a diagram illustrating a timing diagram of signals of the AP 110 and the DDIC 120 according to another embodiment of the present invention. As shown in FIG. 6, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is not too late, and the DDIC 120 has enough margin to prepare for outputting the driving signals to display the image data (i.e., the frame F3 is received before the necessary preparation time of displaying F3), the timing controller 124 does not increase a length of the front porch of the frame F2.

In addition, the start of valid TE period of F3 may have an offset to maintain the minima TE interval and the timing controller 124 can increase a length of the front porch of the frame F3 to delay the displaying time of a next frame F4, wherein the front porch of the frame F3 can be increased by adding invalid data or null data. The increased length of the front porch of the frame F3 can compensate the decreased margin of the DDIC 120.

In this embodiment, the increased length of the front porch of the frame F3 is equal to a delay time of the TE signal. Specifically, if the DDIC 120 should send the TE signal at time t1 , but in fact the DDIC 120 sends the TE signal at time t2, the increased length of the front porch of the frame F3 can correspond to a difference between time t2 and time t1.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late and the DDIC 120 does not have enough margin for outputting the image data, the length of the front porch of the frame F4 is increased and the timeout mechanism is triggered. Therefore, the source/gate driver 126 sends the same driving signals to the panel 1 30 so that the panel 130 shows a repeated frame F4.

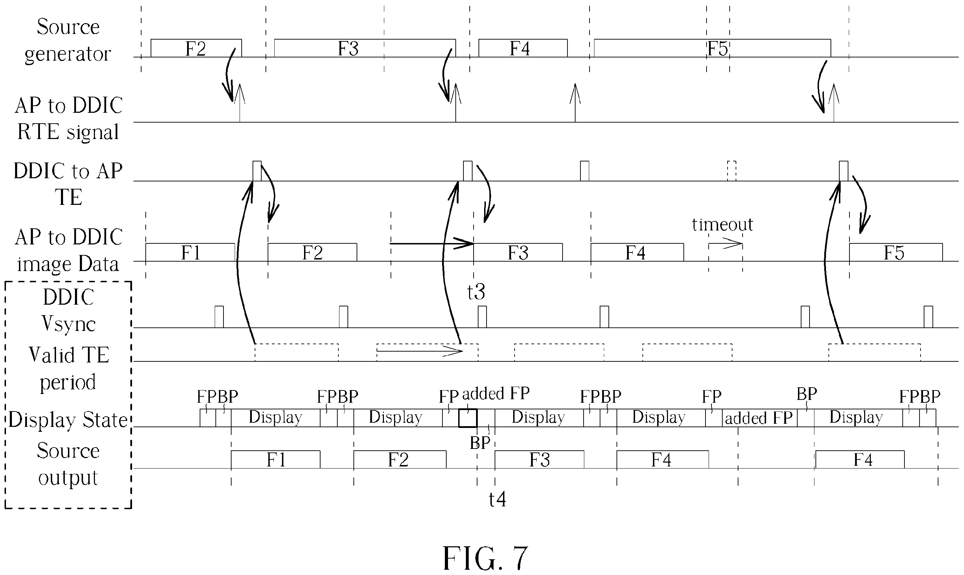

FIG. 7 is a diagram illustrating a timing diagram of signals of the AP 110 and the DDIC 120 according to another embodiment of the present invention. As shown in FIG. 7, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is not too late, and the DDIC 120 has enough margin to prepare for outputting the driving signals to display the image data (i.e., the frame F3 is received before the necessary preparation time of displaying F3), the timing controller 124 only increases a small length of the front porch of the frame F2 to wait a RTE signal from RTE signal generator 114. The valid TE period may extend to the increased front porch.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late, the timeout mechanism is triggered even if the length of the front porch of the frame F4 is increased. Therefore, the source/gate driver 126 sends the same driving signals to the panel 130 so that the panel 130 shows a repeated frame F4.

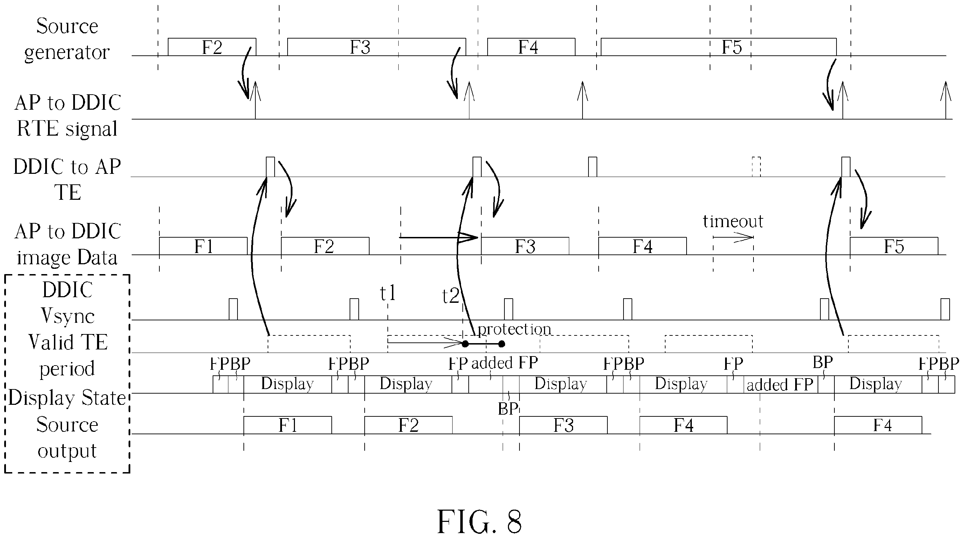

FIG. 8 is a diagram illustrating a timing diagram of signals of the AP 110 and the DDIC 120 according to another embodiment of the present invention. As shown in FIG. 8, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is a little too late, and the DDIC 120 does not have enough margin to prepare for outputting the driving signals to display the image data (i.e., the frame F3 is received after the necessary preparation time of displaying F3), the timing controller 124 only increases a small length of the front porch of the frame F2. In addition, the added length of the front porch of the frame F2 depends on a protection period, wherein the protection period is to make sure that the source/gate driver 126 starts to output the driving signals corresponding to the frame F3 after the buffer 122 has stored a predetermined amount of image data of the frame F3, to prevent the tearing effect issue.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5. In this embodiment, because the DDIC 120 receives the frame F5 too late, the timeout mechanism is triggered even if the length of the front porch of the frame F4 is increased. Therefore, the source/gate driver 126 sends the same driving signals to the panel 130 so that the panel 130 shows a repeated frame F4.

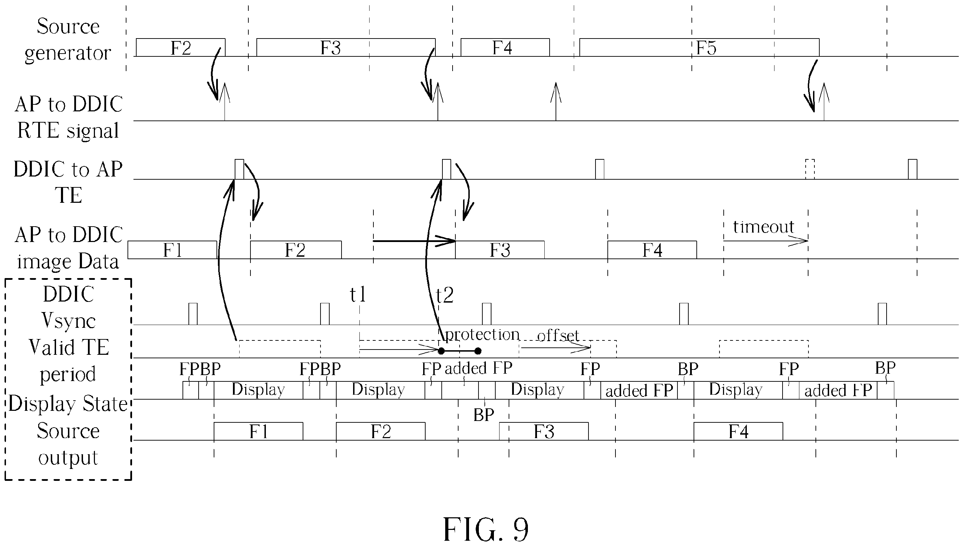

FIG. 9 is a diagram illustrating a timing diagram of signals of the AP 110 and the DDIC 120 according to another embodiment of the present invention. As shown in FIG. 9, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is a little too late, and the DDIC 120 does not have enough margin to prepare for outputting the driving signals to display the image data (i.e., the frame F3 is received after the necessary preparation time of displaying F3), the timing controller 124 only increases a small length of the front porch of the frame F2. In addition, the added length of the front porch of the frame F2 depends on a protection period, wherein the protection period is to make sure that the source/gate driver 126 starts to output the driving signals corresponding to the frame F3 after the buffer 122 has stored a predetermined amount of image data of the frame F3, to prevent the tearing effect issue.

In this embodiment, the increased length of the front porch of the frame F2 is used to prevent the tearing effect issue, so the increased length of the front porch may be less than a delay time of the TE signal. Specifically, if the DDIC 120 should send the TE signal at time t1, but in fact the DDIC 120 sends the TE signal at time t2, the increased length of the front porch of the frame F2 is less than a difference between time t2 and time t1.

In addition, the start of valid TE period of F3 may have an offset to maintain the minima TE interval and the timing controller 124 can increase a length of the front porch of the frame F3 to delay the displaying time of a next frame F4, wherein the front porch of the frame F3 can be increased by adding invalid data or null data. The increased length of the front porch of the frame F3 can compensate the decreased margin of the DDIC 120. For example, the increased length of the front porch of the frame F3 is equal to a delay time of the TE signal. Specifically, the increased length of the front porch of the frame F3 can correspond to a difference between time t2 and time t1.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

Regarding the generation of the image data of the frame F5, the source generator 112 uses more time to generate a complete frame F5, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 130 to display the contents of the frame F5. In this embodiment, because the DDIC 120 receives the frame F5 too late and the DDIC 120 does not have enough margin for outputting the image data, the length of the front porch of the frame F4 is increased and the timeout mechanism is triggered.

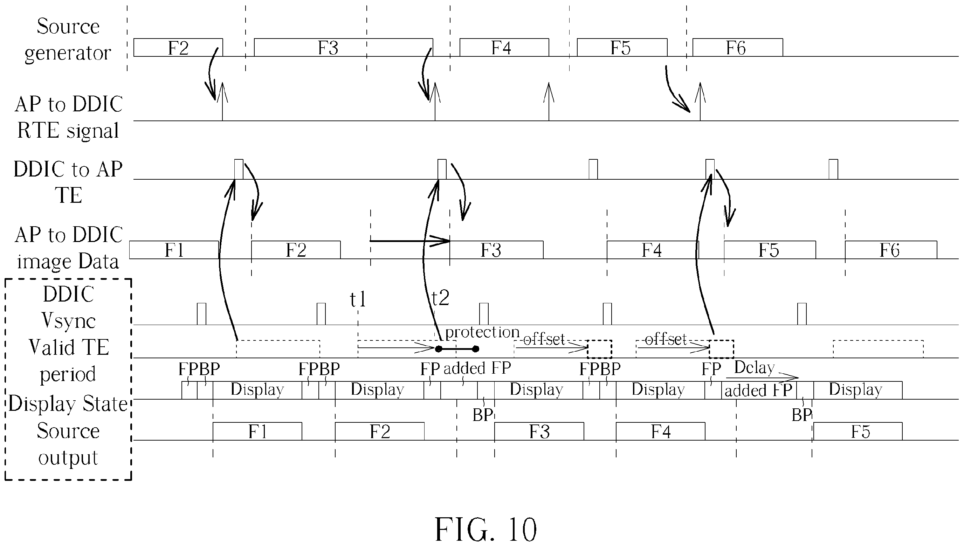

FIG. 10 is a diagram illustrating a timing diagram of signals of the AP 110 and the DDIC 120 according to another embodiment of the present invention. As shown in FIG. 10, the source generator 112 is configured to sequentially generate image data of a plurality of frames. Firstly, after the source generator 112 generates image data of the frame F2, the RTE signal generator 114 sends a RTE signal to the DDIC 120. After the DDIC 120 receives the RTE signal, the DDIC 120 starts to send a TE signal to the AP 110. In this embodiment, the DDIC 120 defines a valid TE period, and the DDIC 120 can send the TE signal to the AP 120 only in the valid TE period, wherein the valid TE period is from a specific point of active region (i.e., displayed data) of the frame to an end of a front porch. After receiving the TE signal from the DDIC 120, the output circuit 116 writes the image data of the frame F2 into the buffer 122, and the timing controller 124 starts to read the image data from the buffer 122 for the source/gate driver 126 to generate corresponding driving signals to the panel 130 to display the contents of the frame F2.

Regarding the generation of the image data of the frame F3, the source generator 112 uses more time to generate a complete frame F3, so the RTE signal generator 114 sends the RTE signal to the DDIC 120 with a larger interval. After the DDIC 120 receives the RTE signal, the DDIC 120 starts to send a TE signal to the AP 110 within the valid TE period. After receiving the TE signal from the DDIC 120, the output circuit 116 writes the image data of the frame F3 into the buffer 122, and the timing controller 124 starts to read the image data from the buffer 122 for the source/gate driver 126 to generate corresponding driving signals to the panel 1 30 to display the contents of the frame F3. In this embodiment, because the delay of the frame F3 is a little] too late, and the DDIC 120 does not have enough margin to prepare for outputting the driving signals to display the image data (i.e., the frame F3 is received after the necessary preparation time of displaying F3), the timing controller 124 only increases a small length of the front porch of the frame F2. In addition, the added length of the front porch of the frame F2 depends on a protection period, wherein the protection period is to make sure that the source/gate driver 126 starts to output the driving signals corresponding to the frame F3 after the buffer 122 has stored a predetermined amount of image data of the frame F3, to prevent the tearing effect issue.

In this embodiment, the increased length of the front porch of the frame F2 is used to prevent the tearing effect issue, so the increased length of the front porch may be less than a delay time of the TE signal. Specifically, if the DDIC 120 should send the TE signal at time t1 , but in fact the DDIC 120 sends the TE signal at time t2, the increased length of the front porch of the frame F2 is less than a difference between time t2 and time t1.

After the source generator 112 generates image data of the frame F4, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F4 into the buffer 122, and the timing controller 124 starts to read the image data from the buffer 122 for the source/gate driver 126 to generate corresponding driving signals to the panel 1 30 to display the contents of the frame F4.

In addition, the start of valid TE period of F3 and F4 may have an offset to maintain the minima TE interval and the timing controller 124 can increase a length of the front porch of the frame F4 to delay the displaying time of a next frame F5, wherein the front porch of the frame F4 can be increased by adding invalid data or null data. The increased length of the front porch of the frame F4 can compensate the decreased margin of the DDIC 120 due to the delay of the frame F3. For example, the increased length of the front porch of the frame F4 is equal to a delay time of the TE signal. Specifically, the increased length of the front porch of the frame F4 can correspond to a difference between time t2 and time t1. In addition, because of the increased front porch, the start of valid TE period of F3 and F4 may have an offset.

After the source generator 112 generates image data of the frame F5, the RTE signal generator 114 sends a RTE signal to the DDIC 120. After the DDIC 120 receives the RTE signal, the DDIC 120 starts to send a TE signal to the AP 110. After receiving the TE signal from the DDIC 120, the output circuit 116 writes the image data of the frame F5 into the buffer 122, and the timing controller 124 starts to read the image data from the buffer 122 for the source/gate driver 126 to generate corresponding driving signals to the panel 1 30 to display the contents of the frame F5.

Briefly summarized, in the electronic device of the present invention, because the AP sends the RTE signal to the DDIC after the source generator outputs a complete frame, and the DDIC generates the TE signal to the AP 110 after receiving the RTE signal, the DDIC can always receive the image data after sending the TE signal to the AP if there is no timeout issue. Therefore, the DDIC can minimize the occurrence of repeated frames to improve smoothness of video and the user satisfaction.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A processor (110), comprising:
a source generator (112), configured to generate image data of a frame;
a request synchronization signal generator (114), configured to generate a request synchronization signal to an integrated circuit only after the source generator (112) generates the image data of the frame completely, wherein the request synchronization signal is used to trigger the integrated circuit to send a synchronization signal to the processor (110);
an output circuit (116), configured to send the image data of the frame to the integrated circuit only after receiving the synchronization signal generated from the integrated circuit in response to the request synchronization signal.

2. The processor (110) of claim 1, wherein if the output circuit (116) receives the synchronization signal that is not generated in response to the request synchronization signal, the output circuit (116) does not send the image data of the frame to the integrated circuit.

3. The processor (110) of claim 1, wherein if the output circuit (116) receives the synchronization signal, but the source generator (112) does not generate image data of the frame completely, the output circuit (116) determines that the received synchronization signal is not generated in response to the request synchronization signal.

4. A control method of a display driver integrated circuit (120), comprising:
receiving a first request synchronization signal from a processor (110);
sending a first synchronization signal, in response to the first request synchronization signal, to the processor (110);
receiving image data of a first frame from the processor (110), wherein a transmission the image data is triggered based on the first synchronization signal; and
generating first driving signals to drive a panel according to the received image data of the first frame.

5. The control method of claim 4, further comprising:
receiving a second request synchronization signal from the processor (1 10);
sending a second synchronization signal, in response to the second request synchronization signal, to the processor (110);
receiving image data of a second frame from the processor (110), wherein a transmission the image data of the second frame is triggered based on the second synchronization signal; and
generating second driving signals to drive the panel according to the received image data of the second frame.

6. The control method of claim 5, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, increasing a length of a front porch of the image data of the first frame.

7. The control method of claim 5, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, increasing a length of a front porch of the image data of the second frame.

8. The control method of claim 5, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, not increasing a length of a front porch of the image data of any one of the first frame and the second frame.

9. The control method of claim 5, further comprising:
determining if a time delay of receiving the second request synchronization signal or a time delay of sending the second synchronization signal triggers a timeout mechanism; and
if the time delay of receiving the second request synchronization signal or the time delay of sending the second synchronization signal triggers the timeout mechanism, increasing a length of a front porch of the image data of the first frame, then generating first driving signals again to drive the panel according to the received image data of the first frame.

10. A display driver integrated circuit (120), configured to perform steps of:
receiving a first request synchronization signal from a processor (110);
sending a first synchronization signal, in response to the first request synchronization signal, to the processor (110);
receiving image data of a first frame from the processor (110), wherein a transmission the image data is triggered based on the first synchronization signal; and
generating first driving signals to drive a panel according to the received image data of the first frame.

11. The display driver integrated circuit (120) of claim 10, further comprising:
receiving a second request synchronization signal from the processor (1 10);
sending a second synchronization signal, in response to the second request synchronization signal, to the processor (110);
receiving image data of a second frame from the processor (110), wherein a transmission the image data of the second frame is triggered based on the second synchronization signal; and
generating second driving signals to drive the panel according to the received image data of the second frame.

12. The display driver integrated circuit (120) of claim 1 1, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, increasing a length of a front porch of the image data of the first frame.

13. The display driver integrated circuit (120) of claim 1 1, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, increasing a length of a front porch of the image data of the second frame.

14. The display driver integrated circuit (120) of claim 1 1, further comprising:
determining if a time delay of receiving the second request synchronization signal or a time delay of sending the second synchronization signal meets a condition; and
if the time delay of receiving the second request synchronization signal or the time delay of sending the second synchronization signal meets the condition, not increasing a length of a front porch of the image data of any one of the first frame and the second frame.

15. The display driver integrated circuit (120) of claim 1 1, further comprising:
determining if a time delay of receiving the second request synchronization signal or a time delay of sending the second synchronization signal triggers a timeout mechanism; and if the time delay of receiving the second request synchronization signal or the time delay of
sending the second synchronization signal triggers the timeout mechanism, increasing a length of a front porch of the image data of the first frame, then generating first driving signals again to drive the panel according to the received image data of the first frame.
